(19) Europäisches Patentamt

European Patent Office

Office européen des brevets

(11) EP 0 664 443 B1

(12) **EUROPEAN PATENT SPECIFICATION**

(45) Date of publication and mention
of the grant of the patent:
**03.03.1999 Bulletin 1999/09**

(51) Int Cl.⁶: **G01J 3/453**

(21) Application number: **94119866.5**

(22) Date of filing: **15.12.1994**

(54) **Interference spectrometer**

Interferenzspektrometer

Spectromètre à interférence

(84) Designated Contracting States:
**DE FR GB NL**

(30) Priority: **19.01.1994 JP 4116/94**

(43) Date of publication of application:
**26.07.1995 Bulletin 1995/30**

(60) Divisional application: **98100312.2 / 0 840 102**

(73) Proprietor: **Yokogawa Electric Corporation
Tokyo 180-8750 (JP)**

(72) Inventors:
 • **Nanko, Tomoaki
  Hoya-shi, Tokyo 202 (JP)**
 • **Tanaami, Takeo
  Katsushika-ku, Tokyo 124 (JP)**
 • **Mikuriya, Kenta
  Hachioji-shi, Tokyo 193 (JP)**

(74) Representative: **Henkel, Feiler, Hänzel
Möhlstrasse 37
81675 München (DE)**

(56) References cited:
 **EP-A- 0 478 801          WO-A-92/21072**

**Description**

BACKGROUND OF THE INVENTION

Field of the Invention

The present invention relates to an interference spectrometer and more particularly to an interference spectrometer in which vibration-proofing and control characteristics of a movable mirror thereof are enhanced.

Description of the Related Art

An interference spectrometer causes an interference by dividing an output light from a light source into two optical paths and by changing a length of each optical path. Generally, a movable mirror is used to change the optical path lengths.

One example for such an interference spectrometer is disclosed in document EP-A-0 478 801. This interferometer further comprises position detecting means for detecting a relative position of the movable mirror and driving control means for controlling the position of said movable mirror based on the information about the relative position of said mirror.

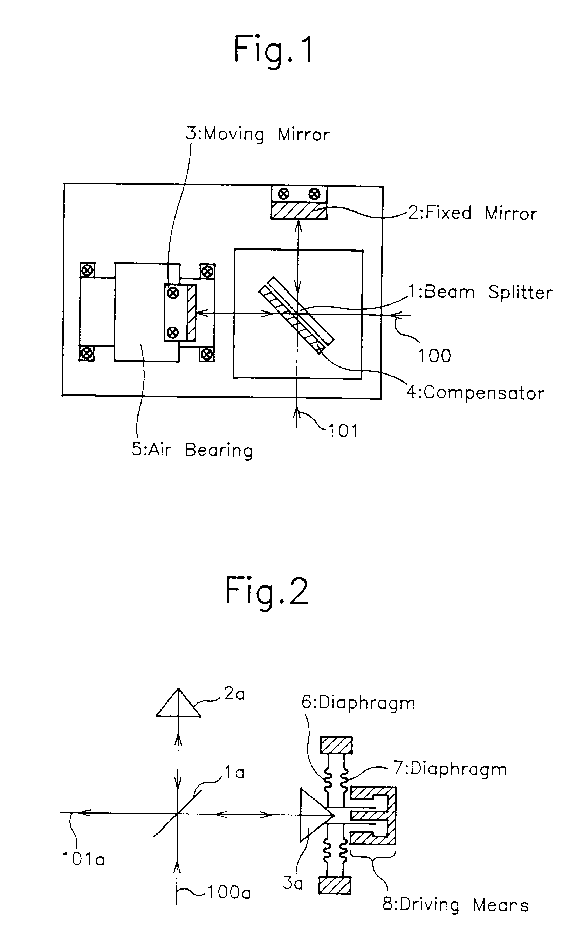

Fig. 1 is a plan view showing one example of such a prior art interference spectrometer, which is described in Japanese Patent Laid-open No. 63-135827. In Fig. 1, the reference numeral (1) denotes a beam splitter, (2) a fixed mirror, (3) a movable mirror, (4) a compensator, (5) an air bearing, (100) an incident light and (101) an interference light.

The incident light 100 is input to the beam splitter 1. A part of the incident light 100 is reflected by the beam splitter 1 and enters the fixed mirror 2. Remainder of the incident light 100 transmits through the beam splitter 1 and compensator 4 and enters the movable mirror 3.

The lights reflected from the fixed mirror 2 and the movable mirror 3 enter the beam splitter 1 again and are output as the interference light 101. The movable mirror 3 is provided on the air bearing 5 and its position is controlled through the control of the air bearing 5.

Fig. 2 is a plan view of one example of another prior art interference spectrometer, which is described in Japanese Utility Model Publication No. 63-1221. In Fig. 2, the reference numeral (1a) denotes a beam splitter, (2a) a fixed mirror, (3a) a movable mirror, (6 and 7) diaphragms, (8) driving means, (100a) an incident light and (101a) an interference light.

The incident light 100a is input to the beam splitter 1a and a part thereof is reflected by the beam splitter 1a and enters the fixed mirror 2a. Remainder of the incident light 100a transmits through the beam splitter 1a and enters the movable mirror 3a.

The lights reflected from the fixed mirror 2a and movable mirror 3a enter the beam splitter 1a again and are output as the interference light 101a. In Fig. 2, the movable mirror 3a is supported by the diaphragms 6 and 7 and its position is controlled by the driving means 8.

The prior art example shown in Fig. 1, however, has a problem that although the air bearing is used to smooth the motion of the movable mirror 3, it has no restraint in an axial direction and hence has less vibration-proofing against a vibration in the axial direction.

The prior art example shown in Fig. 2 also has problems that although a certain degree of restraint in the axial direction may be obtained by the diaphragms 6 and 7, a large diaphragm is required to move the movable mirror 3a to a large extent and that the movable mirror 3a has to be driven by a large force if the restraint is strong, thereby consuming much electrical power.

On the other hand, there is known a method of detecting a speed of the movable mirror by using an interference signal of a He-Ne laser to control the speed of the movable mirror.

In such prior art example however, since a band of the interference signal of the He-Ne laser depends on the speed of the movable mirror, a control system thereof is also affected by that and a full control cannot be exerted when the movable mirror is driven at low speed. Furthermore, a detectable resolution of the speed of the movable mirror is restricted to about a half of an output wavelength of the He-Ne laser.

SUMMARY OF THE INVENTION

Accordingly, it is an object of the present invention to solve the aforementioned problems of the interference spectrometer by realizing an interference spectrometer in which vibration-proofing of a movable mirror is enhanced and which consumes less power.

According to the present invention the interference spectrometer which causes an interference by dividing an output light from a light source into two optical paths and by changing a length of each optical path comprises a movable mirror for changing the optical path lengths, parallel springs for supporting the movable mirror, position detecting means for detecting a position of the movable mirror and driving control means for controlling the position of the movable mirror based on an output of the position detecting means. Further, in a preferred embodiment, it comprises driving control means for controlling the position of the movable mirror by driving at a natural frequency of a spring system composed of the movable mirror and the parallel springs based on the output of the position detecting means.

Other and further objects of the present invention will become obvious upon an understanding of the illustrative embodiments about to be described or will be indicated in the appended claims, and various advantages not referred to herein will occur to one skilled in the art upon employment of the invention in practice.

BRIEF DESCRIPTION OF THE DRAWINGS

Fig. 1 is a plan view showing one example of a prior art interference spectrometer;

Fig. 2 is a plan view showing one example of another prior art interference spectrometer;

Fig. 3 is a structural block diagram illustrating a first preferred embodiment of an interference spectrometer of the present invention;

Fig. 4 is a block diagram showing a control system of the embodiment shown in Fig. 3;

Fig. 5 is a graph of a characteristic curve showing a frequency characteristic of a gain of a transfer function "G";

Figs. 6A and 6B are Bode diagrams of a transfer function "G'";

Fig. 7 is a structural drawing showing a second embodiment of an interference spectrometer of the present invention; and

Figs. 8A and 8B are a structural drawing and an equivalent circuit diagram illustrating a third embodiment of an interference spectrometer of the present invention.

DETAILED DESCRIPTION OF PREFERRED EMBODIMENT

Referring now to the drawings, the present invention will be explained in detail.

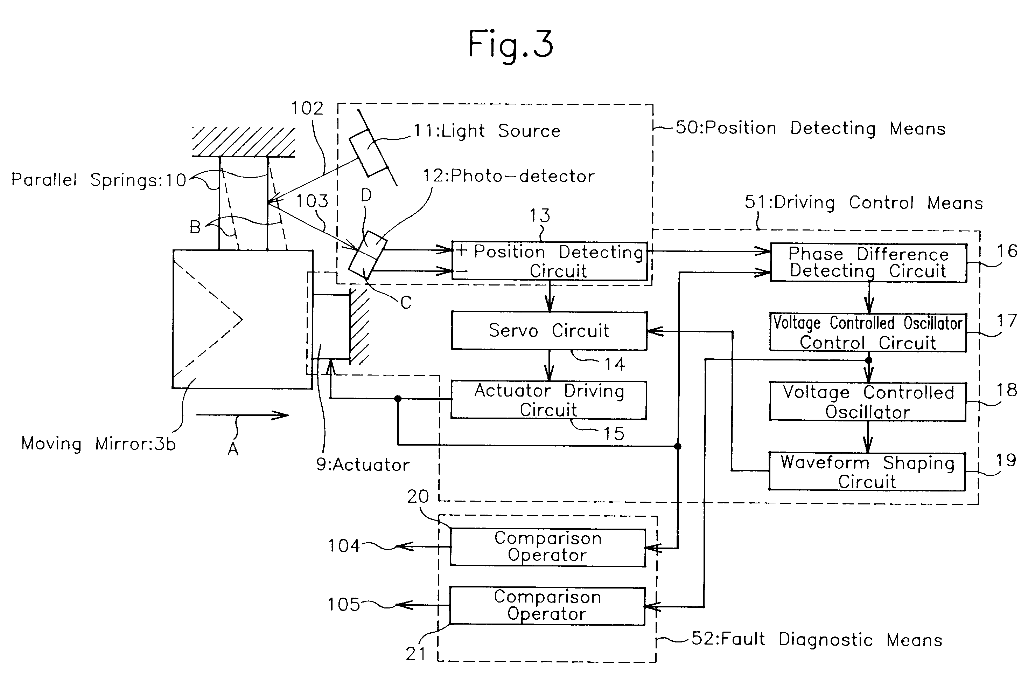

Fig. 3 is a structural block diagram illustrating a first preferred embodiment of an interference spectrometer of the present invention. In Fig. 3, the reference numeral (3b) denotes a movable mirror such as a corner cube mirror, (9) an actuator, (10) a parallel spring, (11) a light source such as a laser diode, (12) a photo-detector divided into two parts, (13) a position detecting circuit, (14) a servo circuit, (15) an actuator driving circuit, (16) a phase difference detecting circuit, (17) a voltage controlled oscillator control circuit, (18) a voltage controlled oscillator, (19) a waveform shaping circuit, (20 and 21) comparison operators, (102) an output light, (103) a reflected light and (104 and 105) fault detection signals.

Here, the components 11 through 13 compose position detecting means 50, components 9 and 14 through 19 compose drive control means 51 and components 20 and 21 compose fault diagnosing means 52, respectively.

The movable mirror 3b is supported by the parallel spring 10 and its position is controlled by the actuator 9.

The output light of the light source 11 is input to the surface of the parallel spring 10 and the reflected light 103 from the parallel spring 10 is input to the photo-detector 12. Two outputs from the photo-detector 12 are connected respectively to the position detecting circuit 13 and an output of the position detecting circuit 13 is connected to the servo circuit 14 and phase difference detecting circuit 16.

An output of the servo circuit 14 is connected to the actuator driving circuit 15 and an output of the actuator driving circuit 15 is connected to the actuator 9, phase difference detecting circuit 16 and comparison operator 20.

On the other hand, an output of the phase difference detecting circuit 16 is connected to the voltage controlled oscillator control circuit 17 and an output of the voltage controlled oscillator control circuit 17 is connected to the voltage controlled oscillator 18 and comparison operator 21.

An output of the voltage controlled oscillator 18 is connected to the waveform shaping circuit 19 and an output of the waveform shaping circuit 19 is connected to the servo circuit 14. The comparison operators 20 and 21 output the fault detection signals 104 and 105.

Now an operation of the embodiment shown in Fig. 3 will be explained. In the position detecting means 50, a position of the movable mirror 3b is detected by inputting the output light 102 from the light source 11 to the parallel spring 10, detecting the reflected light 103 by the photo-detector 12 divided into two parts and calculating the lights by the position detecting circuit 13.

That is, when the movable mirror 3b moves in the direction of arrow "A" in Fig. 3, the parallel spring 10 deforms as shown by "B", so that more reflected light 103 enters a part "D" rather than part "C" of the photo-detector 12 divided into two parts. The position of the movable mirror 3b is found by calculating the difference of incident light amounts by the position detecting circuit 13.

In the driving control means 51, the servo circuit 14 generates a control signal so that a position signal of the movable mirror 3b which is output by the position detecting circuit 13 coincides with a position control signal which is output by the waveform shaping circuit 19 and based on the control signal, the actuator driving circuit 15 drives the actuator 9 so as to control the position of the movable mirror 3b.

The phase difference detecting circuit 16 finds a phase difference of the position signal of the movable mirror 3b and an output of the actuator driving circuit 15 which is proportional to a force generated by the actuator 9. The phase difference will become 90° when the movable mirror 3b is driven at a natural frequency of a spring system composed of the movable mirror 3b and the parallel spring 10.

Accordingly, the voltage controlled oscillator control circuit 17 controls the voltage controlled oscillator 18 so that the phase difference becomes 90° and the waveform shaping circuit 19 performs a filtering process and adjustment of gain on the output of the voltage controlled oscillator 18 to output as the position control signal.

Further, in the fault diagnosing means 52, a fault is determined by monitoring the outputs of the actuator driving circuit 15 and voltage controlled oscillator control circuit 17. That is, when the actuator 9 does not operate due to a disconnection or the like, the output of the actuator driving circuit 15 turns out to be a large value as compare to that during normal operation. Further, when the parallel spring 10 deteriorates due to a metallic fatigue or the like, the natural frequency of the spring system changes. The fault is determined by comparing the output value of the actuator driving circuit 15 and the output change of the voltage controlled oscillator control circuit 17 which is the change of the natural frequency with the normal values by the comparison operators 20 and 21.

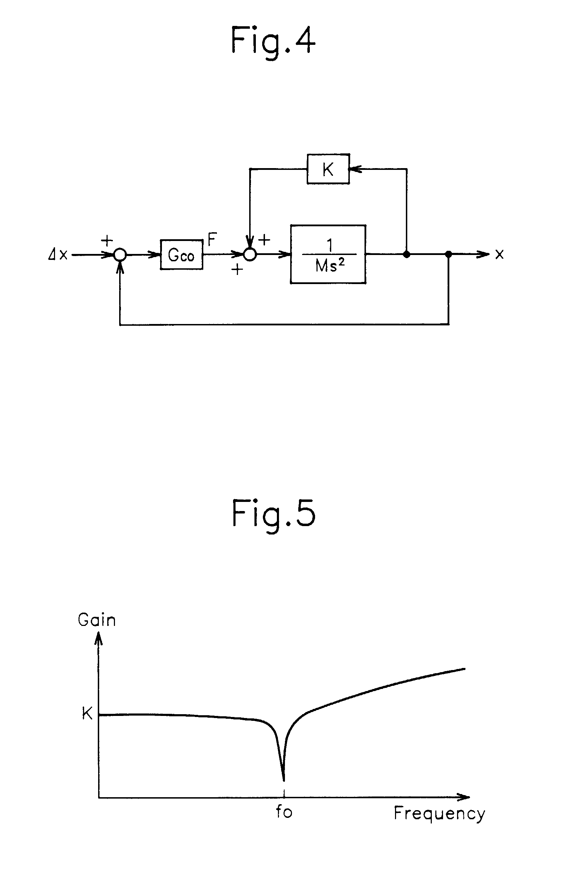

The operation when the movable mirror 3b is driven at the natural frequency of the spring system will be explained in detail with reference to Figs. 4 through 6.

Fig. 4 is a block diagram showing a control system of the embodiment shown in Fig. 3. In the figure, the reference character (K) denotes a spring constant of the parallel spring 10, $(G_{ca})$ a transfer function of the actuator 9, servo circuit 14 and actuator driving circuit 15, (M) weight of the movable mirror 3b, (s) a differential operator, (F) a driving force generated by the actuator 9, (x) a displacement from a neutral position of the movable mirror 3b, ($\Delta$x) the position control signal of the movable mirror 3b.

Under the above-mentioned condition, the transfer function "G" from the position control signal $\Delta$x to the driving force F may be expressed as follows:

$$G = F/\Delta x$$

$$= G_{ca}/\{G_{ca}/(K + Ms^2)\}$$

$$= K + Ms^2 \qquad (1)$$

Fig. 5 is a graph showing a plotted curve of gains of the equation (1), which is the transfer function. When the actuator 9 is driven by a resonance frequency "fo"; i.e.,

$$fo = 1/2\pi(K/M)^{1/2} \qquad (2)$$

the driving force F may be smaller, i.e., a less power may be consumed, if the position control signal $\Delta$x is varied at a constant amplitude.

A transfer function "G'" from the driving force F to the displacement from the neutral position x is:

$$G' = x/F = 1/(K + Ms^2) \qquad (3)$$

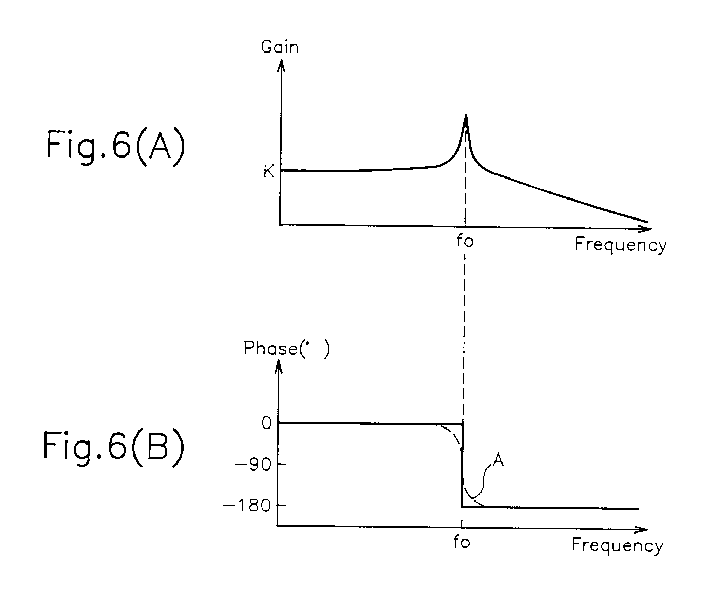

and Bode diagrams of the transfer function G' become as shown in Figs. 6A and 6B.

Although the phase changes stepwise by 180° at the point of the resonance frequency fo in Fig. 6B, it actually does not change stepwise as shown in the figure because of a damping effect of materials. It changes mildly more or less as shown by the broken line A, so that it may be controlled by the driving control means 51 so that it becomes 90°.

As a result, the vibration-proofing may be enhanced by supporting the movable mirror 3b by the parallel spring 10 and by detecting the position of the movable mirror 3b to control the position thereof and the power may be saved by driving at the natural frequency of the spring system.

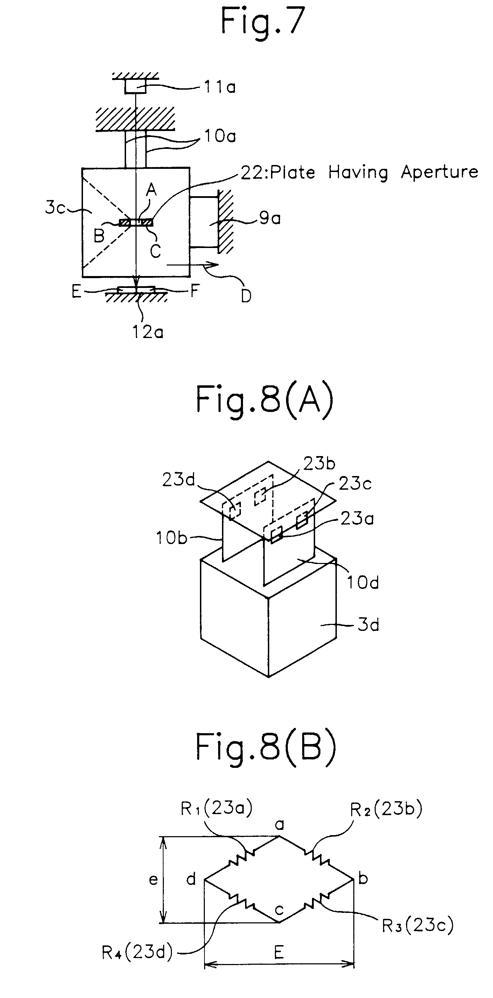

Fig. 7 is a structural drawing showing a second embodiment of an interference spectrometer of the present invention. The position detecting circuit 13, driving control means 51 and fault diagnosing means 52 are omitted here since their structure is the same.

In Fig. 7, the reference numeral (3c) denotes a movable mirror, (9a) an actuator, (10a) an parallel spring, (11a) a light source, (12a) a photo-detector divided into two parts and (22) a plate having an aperture. The components 11a, 12a and the position detecting circuit 13 (not shown) compose position detecting means 50a.

The present embodiment is different from the first embodiment shown in Fig. 3 in that the plate 22 having the aperture is attached to the movable mirror 3c and the light source 11a and photo-detector 12a are disposed so that an output light from the light source 11a transmits through the aperture and the transmitted light enters the photo-detector 12a.

In the plate 22 having the aperture, a portion "A" is the aperture and portions "B" and "C" block the output light from the light source 11a.

When the movable mirror 3c moves in the direction of arrow C in Fig. 7 for example, the aperture also moves in the direction of C along that, decreasing light entering a portion "E" of the photo-detector 12a and increasing light entering a portion "F" of the photo-detector 12a.

As a result, the position of the movable mirror 3c may be found similarly to the first embodiment by finding a difference at the portions "E" and "F" of the photo-detector 12a.

Figs. 8A and 8B are a structural drawing and equivalent circuit diagram illustrating a third embodiment of an interference spectrometer of the present invention. Here, the driving control means 51 and fault diagnosing means 52 are omitted since their structure is the same.

In Fig. 8A, the reference numeral (3d) denotes a movable mirror, (10b and 10c) parallel springs, and (23a, 23b, 23c and 23d) strain gages.

The present embodiment is different from the first embodiment shown in Fig. 3 in that the movable mirror 3b is supported by the parallel springs 10b and 10c, the strain gages 23b and 23d are attached to the parallel spring 10b and the strain gages 23a and 23c are attached to the parallel spring 10c, respectively, and a bridge circuit is composed by the strain gages 23a through 23d. That is, the position of the movable mirror 3d is detected not optically but by gauging strain.

Fig. 8B is a circuit diagram showing an equivalent circuit of the bridge circuit composed of the strain gages 23a through 23d. In the figure, the reference numerals 23a through 23d are equivalent to those shown in Fig. 8A.

An operation of the third embodiment shown in Figs. 8A and 8B will now be explained. A voltage "E" is applied between points b and d in Fig. 8B to detect a potential difference "e" between points a and c in the figure. Consider that resistance values of the strain gages 23a through 23d are equal respectively to R1, R2, R3 and R4, a distortion factor of each of the strain gages 23a through 23d is "$K_3$" and strains which result in each of the strain gages 23a through 23d are epsilon 1, epsilon 2, epsilon 3 and epsilon 4.

Under the above-mentioned condition, the potential difference e may be approximately expressed as follows:

$$e = K_s * E * (\varepsilon 1 - \varepsilon 2 + \varepsilon 3 - \varepsilon 4)/4 \qquad (4)$$

Consider also a strain in the axial direction "$\varepsilon_a$" and a strain caused by a torsional vibration as "$\varepsilon_t$" assuming that an absolute value of the strain caused by the move of the movable mirror 3d in the axial direction and that of the strain caused by the torsional vibration are equal in the strain gages 23a through 23d.

When the move in the axial direction and the torsional vibration are applied to the strain gages 23a through 23d, the strains "$\varepsilon 1$" through "$\varepsilon 4$" may be expressed as follows;

$$\varepsilon 1 = \varepsilon_a - \varepsilon_t \qquad (5)$$

$$\varepsilon 2 = -\varepsilon_a - \varepsilon_t \qquad (6)$$

$$\varepsilon 3 = \varepsilon_a + \varepsilon_t \qquad (7)$$

$$\varepsilon 4 = -\varepsilon_a + \varepsilon_t \qquad (8)$$

where a direction into which the strain extends in positive.

Here, when the equations (5) through (8) are substituted for the equation (4), the following equation may be obtained;

$$e = K_s * E * \varepsilon_a \qquad (9)$$

As a result, the strain in the axial direction, i. e., the position only in the axial direction, may be found by constructing the bridge circuit by providing the parallel springs 10b and 10c and strain gages 23a through 23d and by detecting the potential difference generated in the bridge circuit.

Further, the position detecting means may be downsized because the strain gages are used as described in the embodiment illustrated in Fig. 8 and a temperature compensation and position detection error may be eliminated by constructing the bridge circuit by the strain gages.

By the way, the vibration-proofing of the movable mirror may be enhanced by controlling the position of the movable mirror just by detecting its position, not by driving it at the natural frequency of the spring system.

Further, for the detection of position of the moving mirror, the present invention is not confined only to those using the optical means or strain gages.

Still more, the fault diagnosing means 52 may be omitted since it is not an essential component in the present invention.

As it is apparent from the above description, the present invention has such effects that the vibration-proofing of the moving mirror may be enhanced by detecting its position to control it and that it allows to realize the interference spectrometer which consumes less power by driving the moving mirror at the natural frequency of the spring system composed of the moving mirror and leaf spring.

While preferred embodiments of the present invention have been described using specific terms, such description is for illustrative purposes only, and it is to be understood that changes and variations may be made without departing from the scope of the following claims.

## Claims

1. An interference spectrometer which causes an interference by dividing an output light from a light source (11) into two optical paths and by changing a length of each optical path, comprising:

   a movable mirror (3b) for changing said optical path length;

   characterized by further comprising:

   parallel springs (10) for supporting said movable mirror (3b);
   position detecting means (50) for detecting a position of said movable mirror (3b); and
   driving control means (51) for controlling the position of said movable mirror (3b) based on an output of said position detecting means (50).

2. The interference spectrometer of claim 1, wherein said position detecting means (50) comprises a light source (11) for irradiating light to said parallel springs (10) and a photo-detector (12) for detecting a reflected light from said parallel springs (10) and detects the absolute position of said movable mirror (3b) based on said reflected light.

3. The interference spectrometer of claim 1, wherein said position detecting means (50) comprises a plate (22) attached to said movable mirror (3b), a light source (lla) for irradiating light to said plate (22) and a photo-detector (12a) for detecting light transmitted through without being blocked by said plate (22) and detects the absolute position of said movable mirror (3b) based on said transmitted light.

4. The interference spectrometer of claim 3, wherein an aperture is created on said plate (22) attached to said movable mirror (3b) and the absolute position of said movable mirror (3b) is detected based on the light which transmits through the aperture.

5. The interference spectrometer of claim 1, wherein said position detecting means (50) comprises strain gages (23a - 23d) provided at said parallel springs (10) and detects the absolute position of said movable mirror (3b) by detecting strains at said parallel springs (10).

6. The interference spectrometer of claim 5, wherein said position detecting means (50) comprises a bridge composed of said strain gages (23a - 23d) provided at said parallel springs (10) and detects a displacement only in the moving direction of said movable mirror (3b) by canceling an output when a torsional vibration is generated at the parallel springs (10).

7. The interference spectrometer of claim 1,

wherein said position detecting means (50) are for detecting an absolute position of said movable mirror (3b) and said driving control means (51) are for controlling the position of said movable mirror (3b) by driving at a natural frequency of a spring system composed of said movable mirror (3b) and said parallel springs (10).

**Patentansprüche**

1. Interferenzspektrometer, das eine Interferenz herbeiführt, indem ein Ausgangslicht von einer Lichtquelle (11) in zwei optische Wege geteilt wird und indem eine Länge jedes optischen Weges geändert wird, mit:
einem bewegbaren Spiegel (3b) zum Ändern der optischen Weglänge;
gekennzeichnet, indem ferner aufweisend:

parallele Federn (10) zum Halten des bewegbaren Spiegels (3b);
eine Positionsdetektiereinrichtung (50) zum Detektieren einer Position des bewegbaren Spiegels (3b) ; und
eine Antriebssteuereinrichtung (51) zum Steuern der Position des bewegbaren Spiegels (3b) auf der Basis einer Ausgabe der Positionsdetektiereinrichtung (50).

2. Interferenzspektrometer nach Anspruch 1, worin die Positionsdetektiereinrichtung (50) eine Lichtquelle (11) zum Bestrahlen der parallelen Federn (10) mit Licht und einen Photodetektor (12) zum Detektieren eines reflektierten Lichts von den parallelen Federn (10) aufweist und die absolute Position des bewegbaren Spiegels (3b) auf der Basis des reflektierten Lichts detektiert.

3. Interferenzspektrometer nach Anspruch 1, worin die Positionsdetektiereinrichtung (50) eine am bewegbaren Spiegel (3b) angebrachte Platte (22), eine Lichtquelle (11a) zum Bestrahlen der Platte (22) mit Licht und einen Photodetektor (12a) zum Detektieren von Licht aufweist, das durchgelassen wurde, ohne durch die Platte (22) blockiert zu werden, und die absolute Position des bewegbaren Spiegels (3b) auf der Basis des durchgelassenen Lichts detektiert.

4. Interferenzspektrometer nach Anspruch 3, worin eine Apertur auf der am bewegbaren Spiegel (3b) angebrachten Platte (22) erzeugt wird und die absolute Position des bewegbaren Spiegels (3b) auf der Basis des Lichts detektiert wird, das durch die Apertur durchgelassen wurde.

5. Interferenzspektrometer nach Anspruch 1, worin die Positionsdetektiereinrichtung (50) an den parallelen Federn (10) vorgesehene Dehnungsmeßgeräte (23a - 23d) aufweist und die absolute Position des bewegbaren Spiegels (3b) durch Detektieren von Dehnungen an den parallelen Federn (10) detektiert.

6. Interferenzspektrometer nach Anspruch 5, worin die Positionsdetektiereinrichtung (50) eine aus den an den parallelen Federn (10) vorgesehenen Dehnungsmeßgeräten (23a - 23d) bestehende Brücke aufweist und eine Verschiebung nur in der Bewegungsrichtung des bewegbaren Spiegels (3b) detektiert, indem eine Ausgabe ausgelöscht wird, wenn an den parallelen Federn (10) eine Torsionsschwingung erzeugt wird.

7. Interferenzspektrometer nach Anspruch 1,

worin die Positionsdetektiereinrichtungen (50) zum Detektieren einer absoluten Position des bewegbaren Spiegels (3b) dienen und die Antriebssteuereinrichtungen (51) dazu dienen, die Position des bewegbaren Spiegels (3b) durch Antreiben bei einer Eigenfrequenz eines Federsystems zu steuern, das aus dem bewegbaren Spiegel (3b) und den parallelen Federn (10) besteht.

## Revendications

1. Spectromètre à interférence qui créé une interférence en divisant une lumière de sortie provenant d'une source (11) de lumière en deux trajets optiques et en modifiant une longueur de chaque trajet optique, comportant :

un miroir (3b) mobile pour modifier la longueur de trajet optique ;

caractérisé par le fait de comprendre en outre :

des ressorts (10) parallèles destinés à supporter le miroir (3b) mobile ;
des moyens (50) de détection de position destinés à détecter une position du miroir (3b) mobile ; et
des moyens (51) de commande d'entraînement destinés à commander la position du miroir (3b) mobile sur la base d'une sortie des moyens (50) de détection de position.

2. Spectromètre à interférence suivant la revendication 1, dans lequel les moyens (50) de détection de position comporte une source (11) de lumière destinée à rayonner de la lumière sur les ressorts (10) parallèles et un photo-capteur (12) destiné à détecter une lumière réfléchie provenant des ressorts (10) parallèles et les moyens (50) de détection de position détectent la position absolue du miroir (3b) mobile sur la base de la lumière réfléchie.

3. Spectromètre à interférence suivant la revendication 1, dans lequel les moyens (50) de détection de position comportent une plaque (22) fixée au miroir (3b) mobile, une source (IIa) de lumière destinée à rayonner de la lumière sur la plaque (22) et un photo-capteur (12a) destiné à détecter de la lumière transmise à travers la plaque (22) qui n'a pas été bloquée par la plaque (22) et les moyens (50) de détection de position détectent la position absolue du miroir (3b) mobile sur la base de la lumière transmise.

4. Spectromètre à interférence suivant la revendication 3, dans lequel une ouverture est créée sur la plaque (22) fixée au miroir (3b) mobile et la position absolue du miroir (3b) mobile est détectée sur la base de la lumière qui est transmise par l'ouverture.

5. Spectromètre à interférence suivant la revendication 1, dans lequel les moyens (50) de détection de position comportent des jauges (23a à 23d) de contrainte qui sont prévues sur les ressorts (10) parallèles et les moyens (50) de détection de position détectent la position absolue du miroir (3b) mobile en détectant des contraintes aux ressorts (10) parallèles.

6. Spectromètre à interférence suivant la revendication 5, dans lequel les moyens (50) de détection de position comportent un pont constitué de jauges (23a à 23d) de contrainte prévues aux ressorts (10) parallèles et détectent un déplacement uniquement dans la direction de déplacement du miroir (3b) mobile en annulant une sortie lorsqu'une vibration en torsion est produite aux ressorts (10) parallèles.

7. Spectromètre à interférence suivant la revendication 1,

dans lequel les moyens (50) de détection de position sont destinés à détecter une position absolue du miroir (3b) mobile et les moyens (51) de commande d'entraînement sont destinés à commander la position du miroir (3b) mobile en entraînant à une fréquence naturelle d'un système de ressort constitué du miroir (3b) mobile et des ressorts (10) parallèles.

# Fig.1

3:Moving Mirror

2:Fixed Mirror

1:Beam Splitter

100

4:Compensator

101

5:Air Bearing

# Fig.2

2a

6:Diaphragm

1a

7:Diaphragm

101a

100a

3a

8:Driving Means

# Fig.3

EP 0 664 443 B1

50:Position Detecting Means

102

11:Light Source

Parallel Springs:10

12:Photo-detector

103

D

B

51:Driving Control Means

C

13
+ Position Detecting Circuit
−

Phase Difference Detecting Circuit — 16

Servo Circuit

Voltage Controlled Oscillator Control Circuit — 17

14

Actuator Driving Circuit

15

Voltage Controlled Oscillator — 18

Moving Mirror:3b

A

Waveform Shaping Circuit — 19

9:Actuator

20

104

Comparison Operator

105

Comparison Operator

21

52:Fault Diagnostic Means

# Fig.4

$\Delta x \longrightarrow + \bigcirc \longrightarrow \boxed{G_{co}} \xrightarrow{F} + \bigcirc \xrightarrow{+} \boxed{\dfrac{1}{Ms^2}} \longrightarrow x$

$\boxed{K}$

# Fig.5

Gain

K

fo          Frequency

Fig.6(A)

Gain

K

fo

Frequency

Fig.6(B)

Phase(°)

0

−90

A

−180

fo

Frequency

# Fig.7

11a

10a

22:Plate Having Aperture

3c

A

B

C

9a

E    F

D

12a

# Fig.8(A)

23b

23d

23c

23a

10b

10d

3d

# Fig.8(B)

$R_1(23a)$

$R_2(23b)$

a

e

d

b

c

$R_4(23d)$

$R_3(23c)$

E

12